# FASCICULE DE BREVET EUROPEEN

(11) **EP 3 001 083 B1**
(45) Date de publication et mention de la délivrance du brevet: **19.04.2017**
(21) Numéro de dépôt: 15186699.3
(22) Date de dépôt: 24.09.2015
(51) Int. Cl.: F16L 9/18, B21C 37/15, F16L 59/12, B21D 9/04

(54) **SYSTÈME ET PROCÉDÉ DE POSITIONNEMENT D'AU MOINS UNE ENTRETOISE DANS UNE CANALISATION LONGITUDINALE**
SYSTEM UND VERFAHREN ZUM POSITIONIEREN MINDESTENS EINER QUERSTREBE IN EINEM LÄNGS VERLAUFENDEN KANALISATIONSSYSTEM
SYSTEM AND METHOD FOR POSITIONING AT LEAST ONE SPACER IN A LONGITUDINAL PIPELINE

(30) Priorité: 26.09.2014 FR 1459107
(43) Date de publication de la demande: 30.03.2016
(73) Titulaire: Stelia Aerospace, 17300 Rochefort (FR)
(72) Inventeur: OLLIVIER, Gérard, 44700 Orvault (FR); GUENO, Olivier, 44550 Saint Malo de Guersac (FR); HAREL, Laurent, 44550 Montoir de Bretagne (FR)
(74) Mandataire: Argyma

(56) Documents cités:
- EP-A1- 2 009 338
- EP-A1- 2 425 906
- JP-A- 2004 278 556
- JP-A- 2009 241 145
- US-A- 5 497 809

## Description

### DOMAINE TECHNIQUE GENERAL ET ART ANTERIEUR

La présente invention concerne un système de positionnement d'au moins une entretoise dans une canalisation longitudinale selon le préambule de la revendication 1 et elle trouve son application dans le domaine de l'aéronautique, plus particulièrement, dans la fabrication d'une canalisation dite « doublée » pour la circulation de carburant.

De manière connue, une canalisation de carburant doublée comporte une première conduite, dite conduite externe, et une deuxième conduite, dite conduite interne, montée dans la première conduite externe. La conduite interne permet de conduire un flux de carburant tandis que la conduite externe forme une enveloppe de protection qui permet, d'une part, de protéger la conduite interne en cas de choc et, d'autre part, de collecter le carburant dans la conduite externe en cas de fuite de la conduite interne. Ce type de canalisation contribue également au confinement des vapeurs de carburant. Une telle canalisation est par exemple connue par la demande de brevet US5497809.

La fabrication d'une telle canalisation de carburant est complexe étant donné qu'il est nécessaire que la conduite interne soit positionnée de manière centrale dans la conduite externe. Par ailleurs, il est nécessaire d'éviter que les conduites entrent en contact lors de la fabrication afin de créer des zones de faiblesse ou d'obstruction au passage du carburant. Des difficultés importantes apparaissent pour la fabrication d'une canalisation de forme incurvée.

De manière classique, pour obtenir une canalisation incurvée, on réalise une étape de cintrage d'une canalisation longitudinale dans laquelle est introduite une entretoise entre la face intérieure de la conduite externe et la face extérieure de la conduite interne. Ainsi, l'entretoise remplit une fonction d'interface entre les deux conduites lors du cintrage et permet d'éviter tout contact entre lesdites conduites.

En pratique, pour positionner l'entretoise entre les deux conduites, l'opérateur manipule manuellement une pige afin de pousser l'entretoise depuis l'ouverture de la canalisation jusque dans la zone longitudinale désirée de la canalisation.

Un tel positionnement de l'entretoise présente de nombreux inconvénients. Tout d'abord, le positionnement de l'entretoise est approximatif, ce qui peut engendrer des inconvénients lors de l'étape de cintrage, les conduites étant alors susceptibles d'entrer en contact. Ensuite, la pige peut elle-même entrer en contact avec lesdites conduites lors du positionnement de l'entretoise. Enfin, un tel procédé ne peut être mis en oeuvre que pour des canalisations de faible longueur, c'est-à-dire, inférieures à 2 m. Du fait de la difficulté d'insertion d'une entretoise dans une canalisation, le nombre de portions cintrées dans une canalisation est limité, en particulier, moins de 1,5 portion cintrée par mètre de canalisation.

Le document EP 2 425 906 A1 concerne la fabrication d'un tube à double paroi, en particulier, utilisé comme tuyau d'échappement d'un moteur à combustion interne. Entre les parois du tube, il est prévu des éléments d'écartement réalisés en mousse métallique pour permettre le cintrage. De telles mousses métalliques présentent l'avantage de se désagréger sans générer de polluant lors de la traversée de gaz d'échappement chauds

L'invention a donc pour but de remédier à ces inconvénients en proposant un système et un procédé pour positionner de manière rapide et fiable une entretoise dans une canalisation longitudinale indépendamment de sa longueur.

### PRESENTATION GENERALE DE L'INVENTION

A cet effet, l'invention concerne un système de positionnement d'au moins une entretoise dans une canalisation longitudinale comportant une conduite externe et une conduite interne montée dans ladite conduite externe, système caractérisé en ce qu'il comprend un module de calage configuré pour maintenir une canalisation longitudinalement selon un axe en conservant un jeu de positionnement entre la conduite interne et la conduite externe, et un module d'introduction comportant un organe pousseur, guidé longitudinalement selon ledit axe, qui est configuré pour déplacer au moins une entretoise dans le jeu de positionnement de la canalisation longitudinale.

Grâce au système selon l'invention, une entretoise peut être positionnée de manière précise et répétable dans une canalisation et, ce, indépendamment de sa longueur. En outre, un tel système de positionnement évite tout endommagement des conduites de la canalisation, la canalisation ne possédant ainsi aucune zone de faiblesse lors de son cintrage.

De préférence, la conduite externe comportant une extrémité avant et une extrémité arrière, le module de positionnement comporte un organe de calage avant et un organe de calage arrière adaptés pour coopérer respectivement avec l'extrémité avant et l'extrémité arrière de la conduite externe. Ainsi, la position de la canalisation est calée de manière précise sur toute sa longueur.

De manière avantageuse, l'organe de calage arrière comporte une pièce d'espacement afin de maintenir le jeu de positionnement entre la conduite interne et la conduite externe. Ainsi, la position des conduites de la canalisation est définie de manière précise pour éviter tout endommagement.

Selon un aspect préféré, ledit organe pousseur possède une section annulaire apte à s'introduire dans le jeu de positionnement de la canalisation longitudinale de manière à éviter tout endommagement des conduites.

De préférence, le module d'introduction comporte une pluralité d'organes de guidage répartis longitudinalement pour guider l'organe pousseur et ainsi s'assurer que celui-ci n'endommage pas les conduites.

De préférence encore, le module d'introduction comporte des moyens d'entraînement de l'organe pousseur afin de permettre une introduction régulière et précise.

De manière préférée, le module d'introduction comporte des moyens de butée configurés pour limiter le déplacement de l'organe pousseur. De préférence, les moyens de butée sont positionnés par rapport à l'organe de calage dans lequel est montée l'extrémité avant de la conduite externe.

L'invention concerne également un procédé de positionnement, au moyen d'un système selon l'invention, d'au moins une entretoise dans une canalisation longitudinale comportant une conduite externe et une conduite interne montée dans ladite conduite externe, le procédé comportant :
- une étape de calage de la canalisation selon un axe en conservant un jeu de positionnement entre la conduite interne et la conduite externe, et
- une étape d'introduction longitudinale selon l'axe de l'entretoise dans le jeu de positionnement de la canalisation longitudinale.

Ainsi, une entretoise peut être positionnée de manière précise et répétable dans une canalisation et, ce, indépendamment de sa longueur. En outre, un tel procédé de positionnement évite tout endommagement des conduites de la canalisation, la canalisation ne possédant ainsi aucune zone de faiblesse lors de son cintrage.

De préférence, le procédé comporte une étape de montage de l'entretoise sur une partie de la conduite interne s'étendant en saillie de la conduite externe. Une telle étape est simple à mettre en oeuvre pour un opérateur et permet d'aligner l'entretoise avec le jeu de positionnement de la canalisation.

De préférence encore, le procédé comporte une étape de mise en place d'un organe de butée pour limiter la course d'introduction et ainsi positionner l'entretoise à la position longitudinale désirée dans la canalisation.

L'invention vise également une méthode de cintrage d'une canalisation longitudinale comportant une conduite externe et une conduite interne montée dans ladite conduite externe, méthode comportant un procédé de positionnement, tel que présenté précédemment, d'au moins une entretoise dans une canalisation longitudinale à une position longitudinale déterminée et une étape de cintrage de ladite canalisation longitudinale au niveau de ladite position longitudinale déterminée.

Le positionnement de l'entretoise étant réalisé de manière répétable et contrôlé, l'étape de cintrage peut être mise en oeuvre sans risque afin d'obtenir des canalisations incurvées dénuées de zones de faiblesse.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue en coupe transversale d'une canalisation ;
- la figure 2 est une représentation schématique en perspective d'un système de positionnement selon l'invention comportant un module de calage et un module d'introduction ;
- la figure 3 est une vue de dessus du module de calage de la figure 2 ;
- la figure 4 est une vue schématique partielle du module de calage ;
- la figure 5 est une vue schématique d'un organe de calage arrière du module de calage ;
- la figure 6 est une autre vue schématique de l'organe de calage arrière dans lequel est montée une canalisation ;
- la figure 7 est une vue de dessus du module d'introduction de la figure 1 ;
- la figure 8 est une vue en perspective de l'organe pousseur du module d'introduction de la figure 7 ;
- la figure 9 est une vue en perspective d'un organe de guidage du module d'introduction de la figure 7 ;
- la figure 10 est une vue en perspective d'un volant d'entraînement du module d'introduction de la figure 7 ;
- la figure 11 est une vue en perspective d'une étape de montage d'une entretoise sur la conduite interne de la canalisation montée dans le module de calage ; et
- la figure 12 est une vue en perspective d'une étape d'introduction de l'entretoise entre la conduite interne et la conduite externe de la canalisation.

Il faut noter que les figures exposent un mode de réalisation préféré de l'invention de manière détaillée pour mettre en oeuvre l'invention, lesdites figures pouvant bien entendu servir à mieux faire comprendre l'invention le cas échéant.

### DESCRIPTION D'UN OU PLUSIEURS MODES DE REALISATION ET DE MISE EN OEUVRE

Par la suite, il va être présenté un système de positionnement d'au moins une entretoise dans une canalisation de carburant pour aéronef en vue de cintrer ladite canalisation sans risque d'endommagement.

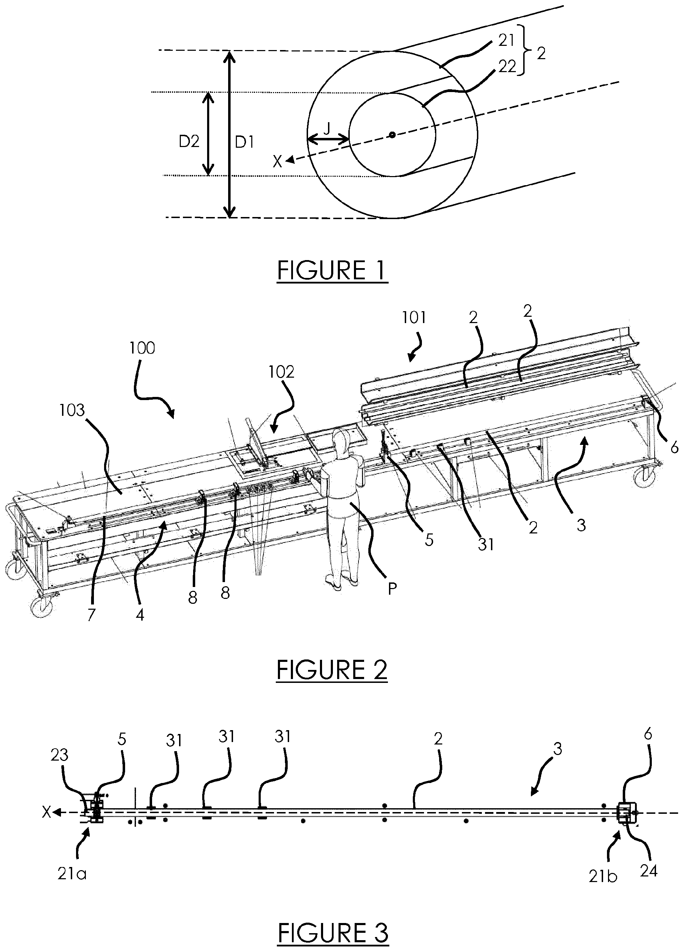

Comme illustré à la figure 1, une canalisation de carburant 2 s'étend longitudinalement selon un axe X et comprend une conduite longitudinale externe 21 et une conduite longitudinale interne 22 montée dans ladite conduite longitudinale externe 21. En condition d'utilisation, les conduites 21, 22 s'étendent coaxialement et sont écartées l'une de l'autre d'un jeu fonctionnel J. De manière préférée, chaque conduite 21, 22 possède une section circulaire. A titre d'exemple, la conduite externe 21 possède une épaisseur de l'ordre de 0,70 mm et un diamètre interne D1 de l'ordre de 24 mm tandis que la conduite interne 22 possède une épaisseur de l'ordre de 0,70 mm et un diamètre externe D2 de l'ordre de 19 mm de manière à définir un jeu fonctionnel J inférieur à 5 mm.

Comme cela sera présenté par la suite, la conduite longitudinale externe 21 est plus courte que la conduite longitudinale interne 22 afin que cette dernière s'étende en saillie depuis chaque extrémité de la conduite longitudinale externe 21.

En référence à la figure 2, il est représenté une forme de réalisation d'un système de positionnement 100 selon l'invention qui comprend plusieurs modules fonctionnels pouvant être utilisés par un opérateur P. En particulier, le système de positionnement 100 comprend un module de stockage 101 pour recevoir une pluralité de canalisation longitudinales 2, un module de découpe 102 pour découper une entretoise à la longueur désirée, un module de calage 3 d'une canalisation 2 lors du positionnement d'une entretoise et un module d'introduction 4 configuré pour déplacer une entretoise dans la canalisation 2 en position de calage. Dans cet exemple, les modules sont montés sur une table de support 103 pourvue de roulettes pour faciliter son déplacement. La position du module de calage 3 est parfaitement définie par rapport au module d'introduction 4 sur la table de support 103 afin de permettre un positionnement précis de l'entretoise comme cela sera présenté par la suite. En particulier, le module de calage 3 et le module d'introduction 4 sont alignés axialement et écartés d'une distance axiale prédéterminée.

En référence à la figure 3, le module de calage 3 s'étend longitudinalement selon l'axe X d'arrière en avant et comporte un premier organe de calage 5, désigné également organe de calage avant 5, et un deuxième organe de calage 6, désigné également organe de calage arrière 6, afin de maintenir la canalisation 2 alignée longitudinalement selon l'axe X. Par la suite, les termes avant et arrière sont définis par rapport à l'axe X qui est orienté de l'arrière vers l'avant.

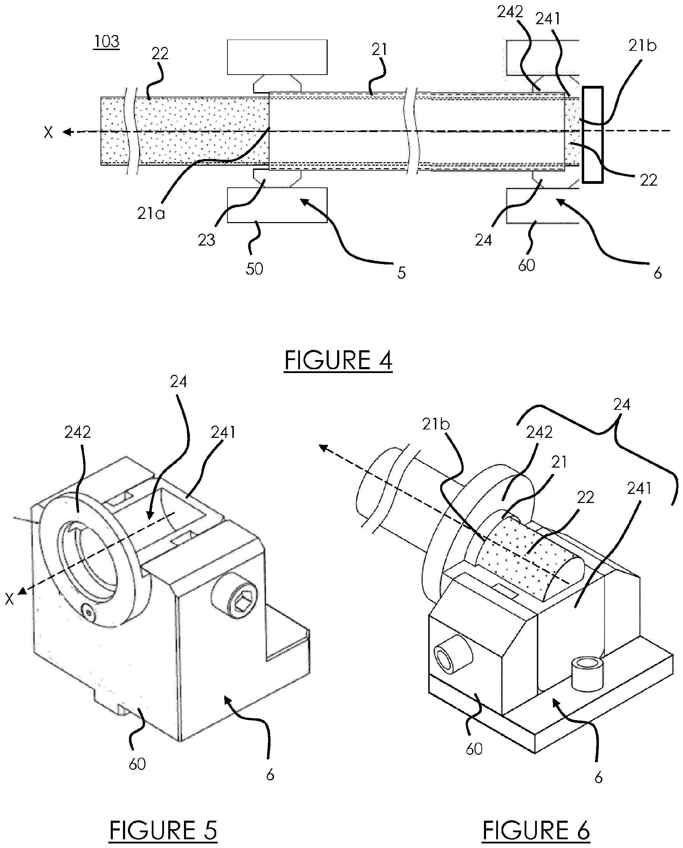

Comme illustré à la figure 4, la conduite longitudinale externe 21 comporte une extrémité avant 21 a et une extrémité arrière 21 b depuis lesquelles s'étend en saillie la conduite longitudinale interne 22. L'organe de calage avant 5 et l'organe de calage arrière 6 sont respectivement positionnés à l'extrémité avant 21 a et à l'extrémité arrière 21 b de la conduite longitudinale externe 21 afin de bloquer la position de la conduite externe 21. De manière préférée, afin de maintenir coaxialement la conduite interne 22 dans la conduite externe 21, l'extrémité arrière 21 b de la conduite longitudinale externe 21 est équipée d'une pièce d'espacement arrière 24 de manière à garantir un jeu de positionnement J entre la conduite longitudinale externe 21 et la conduite longitudinale interne 22. La pièce d'espacement arrière 24 est positionnée à l'extrémité arrière 21 b de la conduite externe 21 depuis laquelle la conduite interne 22 s'étend en saillie.

Les organes de calage 5, 6 sont montés dans la table de support 103, l'organe de calage avant 5 étant fixe afin d'être positionné précisément par rapport au module d'introduction 4 tandis que l'organe de calage arrière 6 est positionné pour s'adapter à la longueur de la canalisation 2. L'organe de calage avant 5 comporte une pièce de butée 23 adaptée pour bloquer la translation de la conduite externe 21 vers l'avant comme illustré à la figure 4. L'organe de calage avant 5 comporte un corps structural 50 comportant une cavité pour recevoir et caler la pièce de butée 23.

Comme illustré à la figure 4, la pièce de butée 23 est montée à l'extrémité avant 21 a de la conduite externe 21 et coopère avec la surface extérieure de la conduite externe 21 sans interférer avec la conduite interne 22 de manière à ce que le jeu fonctionnel J entre les conduites 21, 22 demeure dégagé.

En référence aux figures 4 à 6, la pièce d'espacement arrière 24 est montée à l'extrémité arrière 21 b de la conduite externe 21 et coopère, d'une part, avec la surface extérieure de la conduite externe 21 et, d'autre part, avec la surface extérieure de la conduite interne 22. En pratique, la pièce d'espacement arrière 24 possède une première empreinte avant 242 correspondant au diamètre de la conduite externe 21 et une deuxième empreinte arrière 241 correspondant au diamètre de la conduite interne 22. Ainsi, grâce à l'organe de calage arrière 6, le module de calage 3 maintient un jeu fonctionnel prédéterminé J au niveau de l'extrémité arrière 21 b de la conduite externe 21. L'organe de calage arrière 6 comporte un corps structural 60 comportant une cavité pour recevoir et caler la pièce d'espacement arrière 24.

En référence plus particulièrement aux figures 5 et 6, l'organe de calage arrière 6 possède une forme de U dont la cavité est tournée verticalement vers le haut. La première empreinte avant 242 de la pièce d'espacement arrière 24 possède une forme annulaire pour recevoir la conduite externe 21 et la guider tandis que la deuxième empreinte arrière 241 de la pièce d'espacement arrière 24 se présente sous la forme d'un demi-cylindre axial pour correspondre au diamètre de la conduite interne 22. Du fait de la différence de diamètres entre les empreintes 241, 242, tout déplacement de la conduite externe 21 vers l'arrière est interdit par la pièce d'espacement arrière 24. En outre, la deuxième empreinte arrière 241 comporte une surface de butée arrière pour bloquer tout déplacement de la conduite interne 21 vers l'arrière. L'extrémité arrière de la canalisation longitudinale 2 est parfaitement positionnée étant donné que tout déplacement des conduites 21, 22 est empêché.

Autrement dit, grâce aux organes de calage 5, 6, le module de calage 3 cale la canalisation 2 selon l'axe X afin de maintenir les conduites 21, 22 sensiblement coaxiales l'une par rapport à l'autre.

De manière préférée, en référence aux figures 2 et 3, le module de calage 3 comporte une pluralité de supports élémentaires 31 répartis longitudinalement sous la conduite externe 21 pour éviter un flambage de la canalisation 2 lors de son calage à ses extrémités.

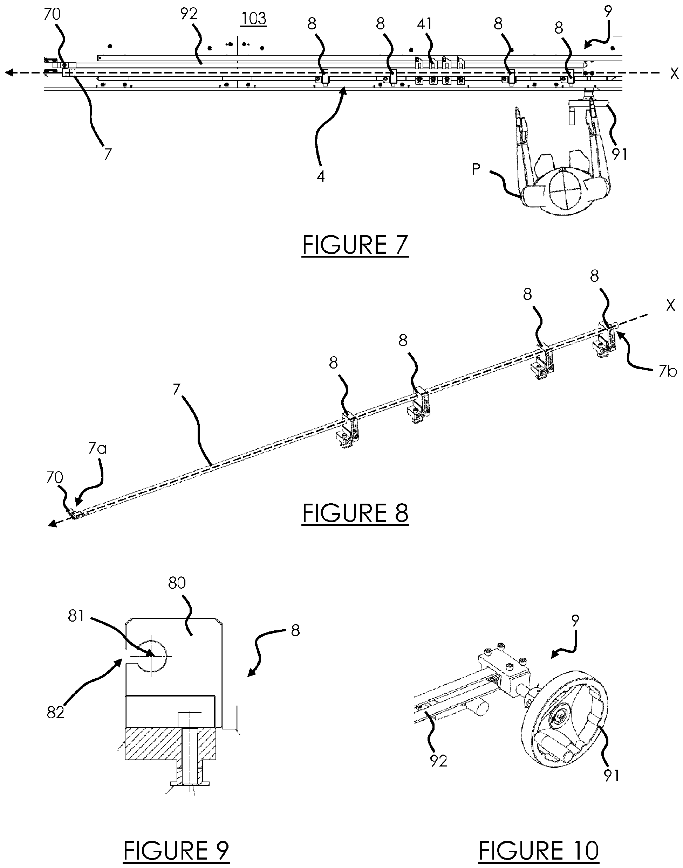

En référence à la figure 7, le module d'introduction 4 comprend un organe pousseur 7, guidé longitudinalement selon ledit axe X, qui est configuré pour déplacer une entretoise entre la conduite longitudinale interne 22 et la conduite longitudinale externe 21 de la canalisation 2, c'est-à-dire, dans l'espace déterminé par le jeu fonctionnel J. En référence à la figure 8, l'organe pousseur 7 se présente sous la forme d'une pige longitudinale de section annulaire et dont le diamètre intérieur est supérieur au diamètre extérieure de la conduite interne 22 et dont le diamètre extérieur est inférieur au diamètre intérieure de la conduite externe 21, l'organe pousseur 7 comprenant une extrémité avant 7a et une extrémité arrière 7b. De manière préférée, le diamètre de l'organe pousseur 7 est égal à 4 mm afin, d'une part, d'être suffisamment rigide et, d'autre part, de limiter les frottements avec la conduite externe 21. De préférence encore, la longueur de l'organe pousseur 7 est comprise entre 1,5 m et 3 m.

De préférence, l'organe pousseur 7 est en carbone de manière à posséder une grande rigidité afin de demeurer aligné longitudinalement lors de son introduction tout en n'étant maintenu que par une de ses extrémités.

L'organe pousseur 7 comporte une partie d'entraînement 70 qui se présente, dans cet exemple, sous la forme d'une languette montée à l'extrémité avant 7a de l'organe pousseur 7. En référence à la figure 7, le module d'introduction 4 comprend en outre une pluralité d'organe de guidage 8, répartis longitudinalement, afin de guider le déplacement de l'organe pousseur 7 selon l'axe X.

Comme illustré à la figure 9, chaque organe de guidage 8 comporte une platine structurale 80, fixée à la table de support 103, qui comprend un orifice traversant 81 s'étendant selon l'axe X et dont le diamètre intérieur est adapté pour coopérer avec le diamètre extérieur de l'organe pousseur 7 afin de permettre son guidage comme représenté à la figure 8. En référence à la figure 9, chaque organe de guidage 8 comporte en outre une rainure de circulation 82, s'étendant parallèlement à l'axe X, mettant en communication l'orifice traversant 81 avec un bord du corps structural 80 de l'organe de guidage 8. Comme cela sera présenté par la suite, la rainure de circulation 82 permet d'autoriser la circulation de la partie d'entraînement 70 lors du guidage longitudinal de la partie avant 7a de l'organe pousseur 7.

En référence à la figure 7, le module d'introduction 4 comprend en outre des moyens d'entraînement 9 de l'organe pousseur 7. Dans cet exemple, en référence aux figures 7 et 10, les moyens d'entraînement 9 comportent un volant d'entraînement 91 relié à la partie d'entraînement 70 de l'organe pousseur 7 par une courroie 92. Ainsi, selon le sens de rotation du volant d'entraînement 91, l'opérateur P peut commander un déplacement vers l'avant ou vers l'arrière de l'organe pousseur 7. Il va de soi que d'autres moyens d'entraînement 9 pourraient convenir, par exemple, un système de pignons avec crémaillère. Il va également de soi que les moyens d'entraînement 9 pourraient être motorisés.

En référence à la figure 7, le module d'introduction 4 comprend en outre des moyens de butée configurés pour bloquer le déplacement de l'organe pousseur 7 afin de définir de manière précise la position longitudinale de l'entretoise dans la canalisation 2, c'est-à-dire, la distance longitudinale par rapport à l'extrémité avant 21 a de la conduite externe 21 dans le module de calage 4.

Dans cet exemple, les moyens de butée se présentent sous la forme d'un organe de butée 41 monté dans l'axe de déplacement de la partie d'entraînement 70 de l'organe pousseur 7 afin d'empêcher tout déplacement vers l'arrière au-delà de la position de l'organe de butée 41. De manière préférée, l'organe de butée 41 est monté de manière amovible dans ladite table de support 103 afin de pouvoir modifier la position longitudinale d'insertion de l'entretoise dans la canalisation 2.

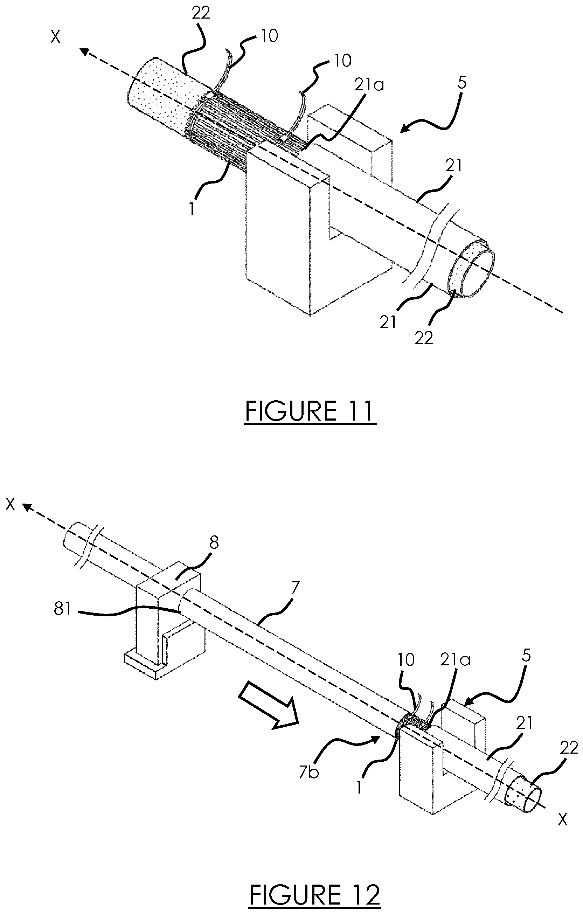

Il va être maintenant présenté une mise en oeuvre d'un procédé de positionnement d'une entretoise dans une canalisation 2. En référence à la figure 11, l'entretoise 1 se présente sous la forme d'une paroi souple en matériau amortisseur du type polymère (polytétrafluoroéthylène (PTFE)) destinée à être roulée autour de la surface extérieure de la conduite interne 22. La longueur axiale de l'entretoise 1 est choisie par l'opérateur P en fonction des instructions nécessaires aux opérations de cintrage qui doivent être réalisées postérieurement sur la canalisation 2.

En référence à la figure 2, le procédé de positionnement d'une entretoise 1 dans une canalisation 2 comporte une étape de calage d'une canalisation 2 du module de stockage 101 dans le module de calage 3. Au cours de l'étape de calage, les extrémités de la canalisation 2 sont respectivement montées dans l'organe de calage avant 5 et l'organe de calage arrière 6 afin que la canalisation 2 soit parfaitement calée dans le module de calage 3 dont la position est définie avec précision par rapport au module d'introduction 4. En position de calage, la conduite interne 22 est en saillie depuis l'extrémité avant 21a de la conduite externe 21. Grâce à la pièce d'écartement arrière 24, les conduites 21, 22 sont coaxiales.

De manière avantageuse, en référence à la figure 2, le module de stockage 101 et le module de calage 3 sont adjacents sur le système de positionnement 100, ce qui limite la pénibilité de l'opérateur P.

Toujours en référence à la figure 2, le procédé comporte en outre une étape de découpe d'une entretoise 1 aux dimensions désirées par un opérateur sur le module de découpe 102 du système de positionnement 100. En pratique, l'opérateur P utilise un massicot pour découper une paroi d'entretoise 1. Il va de soi que l'entretoise 1 pourrait être découpée préalablement à l'étape de calage de la canalisation 2 dans les modules de calage 5, 6.

Comme illustré à la figure 11, le procédé comporte en outre une étape de montage de l'entretoise 1 autour de la portion de la conduite interne 22 en saillie depuis l'extrémité avant 21 a de la conduite externe 21. A cet effet, l'entretoise 1 est roulée à la périphérie de la conduite interne 22 afin de posséder une épaisseur constante. Puis, l'entretoise 1 est maintenue par des moyens de fixation, de préférence amovibles, autour de la conduite interne 22. Dans cet exemple de mise en oeuvre, l'entretoise 1 est maintenue par des liens amovibles 10, de préférence, des colliers en matière plastique pouvant être utilisés lors du montage de l'entretoise puis retirés au fur et à mesure de l'introduction de l'entretoise 1 afin d'être réutilisés postérieurement. De manière préférée, des liens amovibles 10 tels que ceux connus sont la désignation commerciale Colson ^{®} ou Rilsan ^{®} pourraient être utilisés.

Le procédé comporte une étape de réglage de la position de l'organe de butée 41 sur la table 103 afin de déterminer la position longitudinale de l'entretoise 1 dans la canalisation 2 par rapport à l'extrémité avant 21a de la conduite externe 21, c'est-à-dire, par rapport à l'organe de calage avant 5 dont la position axiale est de préférence fixe par rapport à la table 103.

En référence à la figure 12, le procédé comporte ensuite une étape d'entraînement de l'organe pousseur 7 selon l'axe X vers l'arrière afin qu'il déplace l'entretoise 1 dans la canalisation 2. Dans cet exemple, l'opérateur P actionne le volant d'entraînement 91 pour déplacer la courroie 92 et ainsi entraîner la partie d'entraînement 70 de l'organe pousseur 7 vers l'arrière.

Au cours de l'entraînement, l'organe pousseur 7 est guidé selon l'axe X dans les orifices 81 des organes de guidage 8. La partie d'entraînement 70 de l'organe pousseur 7 se déplace dans la rainure de circulation 82 de chaque organe de guidage 8 et n'est ainsi pas stoppée par les organes de guidage 8.

Au cours de l'entraînement, l'extrémité arrière 7b de l'organe pousseur 7 entre en contact avec l'entretoise 1 et la déplace de manière progressive et contrôlée dans le jeu fonctionnel J, c'est-à-dire, entre la conduite interne 22 et la conduite externe 21 au niveau de l'organe de calage avant 5. L'organe pousseur 7 entre en contact avec tout le bord annulaire avant de l'entretoise 1, ce qui garantit un déplacement régulier. Bien que l'organe pousseur 7 ne soit maintenu qu'à son extrémité avant lors de l'introduction, celui-ci demeure aligné selon l'axe X du fait de la rigidité de son corps en carbone.

Lorsque la partie d'entraînement 70 de l'organe pousseur 7 entre en contact avec l'organe de butée 41, l'entretoise 1 est située à la position longitudinale désirée dans la canalisation 2. L'organe pousseur 7 est alors déplacé en sens inverse pour le sortir de la canalisation 2. La canalisation 2, dans laquelle est positionnée l'entretoise 1, peut être retirée du module de calage 3 afin de subir une étape de cintrage, l'entretoise 1 amortissant les efforts mécaniques de cintrage pour protéger les conduites 21, 22.

De manière avantageuse, lorsque l'entretoise 1 est déjà partiellement introduite dans la canalisation 2, les liens amovibles 10 peuvent être retirés étant donné que la conduite externe 21 assure le maintien de l'entretoise 1 autour de la périphérie de la conduite interne 22. De manière alternative, lors de l'introduction de l'entretoise 1 dans la canalisation 2, les liens amovibles 10 maintenant l'entretoise 1 entrent en contact avec la conduite externe 21 et se translatent sur l'entretoise 1 jusqu'à s'étendre sur l'organe pousseur 7. Autrement dit, les liens amovibles 10 ne sont pas introduits dans la canalisation 2.

De préférence, plusieurs entretoises sont introduites de manière successive dans une même canalisation 2 à des positions longitudinales différentes afin de former une canalisation 2 comportant plusieurs portions cintrées.

Grâce à l'invention, plusieurs entretoises 1 peuvent être placées de manière rapide et répétable dans une canalisation 2, ce qui procure un gain de temps et limite ainsi le coût global des opérations préalables au cintrage. De plus, comme le positionnement des entretoises 1 est précis, le cintrage est réalisé de manière optimale.

## Revendications

1. Système (100) de positionnement d'au moins une entretoise (1) dans une canalisation longitudinale (2) comportant une conduite externe (21) et une conduite interne (22) montée dans ladite conduite externe (21), système (100) **caractérisé en ce qu'**il comporte :
- un module de calage (3) configuré pour maintenir une canalisation (2) longitudinalement selon un axe X en conservant un jeu de positionnement (J) entre la conduite interne (22) et la conduite externe (21), et
- un module d'introduction (4) comportant un organe pousseur (7), guidé longitudinalement selon ledit axe X, qui est configuré pour déplacer au moins une entretoise (1) dans le jeu de positionnement (J) de la canalisation longitudinale (2).

2. Système selon la revendication 1, dans lequel, la conduite externe (21) comportant une extrémité avant (21 a) et une extrémité arrière (21 b), le module de positionnement (4) comporte un organe de calage avant (5) et un organe de calage arrière (6) adaptés pour coopérer respectivement avec l'extrémité avant (21 a) et l'extrémité arrière (21 b) de la conduite externe (21).

3. Système selon l'une des revendications 1 à 2, dans lequel, ledit organe pousseur (7) possède une section annulaire apte à s'introduire dans le jeu de positionnement (J) de la canalisation longitudinale (2).

4. Système selon l'une des revendications 1 à 3, dans lequel, le module d'introduction (4) comporte une pluralité d'organes de guidage (8) répartis longitudinalement selon l'axe X pour guider l'organe pousseur (7).

5. Système selon l'une des revendications 1 à 4, dans lequel, le module d'introduction (4) comporte des moyens d'entraînement (9) de l'organe pousseur (7).

6. Système selon l'une des revendications 1 à 5, dans lequel, le module d'introduction (4) comporte des moyens de butée (41) configurés pour limiter le déplacement de l'organe pousseur (7).

7. Procédé de positionnement, au moyen d'un système selon l'une des revendications 1 à 6, d'au moins une entretoise (1) dans une canalisation longitudinale (2) comportant une conduite externe (21) et une conduite interne (22) montée dans ladite conduite externe (21), le procédé comportant :
- une étape de calage de la canalisation (2) selon un axe X en conservant un jeu de positionnement (J) entre la conduite interne (22) et la conduite externe (21), et
- une étape d'introduction longitudinale selon l'axe X de l'entretoise (1) dans le jeu de positionnement (J) de la canalisation longitudinale (2).

8. Procédé selon la revendication 7, dans lequel, le procédé comporte une étape de montage de l'entretoise (1) sur une partie de la conduite interne (22) s'étendant en saillie de la conduite externe (21).

9. Procédé selon l'une des revendications 7 et 8, dans lequel, le procédé comporte une étape de mise en place d'un organe de butée (41) pour limiter la course d'introduction.

10. Méthode de cintrage d'une canalisation longitudinale (2) comportant une conduite externe (21) et une conduite interne (22) montée dans ladite conduite externe (21), méthode comportant :
- un procédé de positionnement, selon l'une des revendications 7 à 9, d'au moins une entretoise (1) dans une canalisation longitudinale (2) à une position longitudinale déterminée ; et
- une étape de cintrage de ladite canalisation longitudinale (2) au niveau de ladite position longitudinale déterminée.

## Patentansprüche

1. System (100) zur Positionierung von mindestens einem Abstandshalter (1) in einer longitudinalen Leitung (2), die ein äußeres Rohr (21) und ein inneres Rohr (22) umfasst, das in dem äußeren Rohr (21) angebracht ist, wobei das System (100) **dadurch gekennzeichnet ist, dass** es umfasst:
- ein Klemmmodul (3), das konfiguriert ist, um eine Leitung (2) longitudinal entlang einer X-Achse zu halten, wobei ein Spiel der Positionierung (J) zwischen dem inneren Rohr (22) und dem äußeren Rohr (21) bewahrt wird, und
- ein Einführungsmodul (4), das ein Schiebeelement (7) umfasst, das longitudinal entlang der Achse X geführt ist und das konfiguriert ist, um den mindestens einen Abstandshalter (1) in dem Spiel der Positionierung (J) der longitudinalen Leitung (2) zu verschieben.

2. System nach Anspruch 1, wobei das äußere Rohr (21) ein vorderes Ende (21a) und ein hinteres Ende (21b) umfasst, wobei das Positionierungsmodul (4) ein vorderes Klemmelement (5) und ein hinteres Klemmelement (6) umfasst, die angepasst sind, um jeweils mit dem vorderen Ende (21a) und dem hinteren Ende (21b) des äußeren Rohres (21) zusammenzuwirken.

3. System nach einem der Ansprüche 1 bis 2, wobei das Schiebeelement (7) einen ringförmigen Abschnitt umfasst, der angepasst ist, in das Spiel der Positionierung (J) der longitudinalen Leitung (2) eingeführt zu werden.

4. System nach einem der Ansprüche 1 bis 3, wobei das Einführungsmodul (4) mehrere Führungselemente (8) umfasst, die longitudinal entlang der X-Achse verteilt sind, um das Schiebeelement (7) zu führen.

5. System nach einem der Ansprüche 1 bis 4, wobei das Einführungsmodul (4) Antriebsmittel (9) für das Schiebeelement (7) aufweist.

6. System nach einem der Ansprüche 1 bis 5, wobei das Einführungsmodul (4) Anschlagmittel (41) aufweist, die konfiguriert sind, um die Verschiebung des Schubelements (7) zu begrenzen.

7. Verfahren zur Positionierung, mittels eines Systems nach einem der Ansprüche 1 bis 6, von mindestens einem Abstandshalter (1) in einer longitudinalen Leitung (2), die ein äußeres Rohr (21) und ein inneres Rohr (22) umfasst, das in dem äußeren Rohr (21) angebracht ist, wobei das Verfahren umfasst:
- einen Schritt zum Festklemmen der Leitung (2) entlang einer Achse X, wobei ein Spiel der Positionierung (J) zwischen dem inneren Rohr (22) und dem äußeren Rohr (21) bewahrt wird, und
- einen Schritt zur longitudinalen Einführung entlang der X-Achse des Abstandshalters (1) in das Spiel der Positionierung (J) der longitudinalen Leitung (2).

8. Verfahren nach Anspruch 7, wobei das Verfahren einen Schritt der Montage des Abstandshalters (1) auf einem Teil des inneren Rohrs (22) vorsieht, das aus dem äußeren Rohr (21) hervorsteht.

9. Verfahren nach einem der Ansprüche 7 und 8, wobei das Verfahren einen Schritt des Platzierens eines Anschlagelements (41) umfasst, um die Einführungsbewegung zu begrenzen.

10. Verfahren zum Biegen einer longitudinalen Leitung (2), die ein äußeres Rohr (21) und ein inneres Rohr (22) umfasst, das in dem äußeren Rohr (21) angebracht ist, wobei das Verfahren umfasst:
- ein Verfahren zum Positionieren nach einem der Ansprüche 7 bis 9, von mindestens einem Abstandshalter (1) in einer longitudinalen Leitung (2) bei einer vorbestimmten longitudinalen Position; und
- einen Schritt des Biegens des longitudinalen Rohrs (2) bei der vorbestimmten, longitudinalen Position.

## Claims

1. System (100) for positioning at least one spacer (1) in a longitudinal pipeline (2), comprising an external pipe (21) and an internal pipe (22) mounted in said external pipe (21), system (100) **characterised in that** it comprises:
- a blocking module (3) configured to maintain a pipeline (2) longitudinally according to an X axis, by keeping a positioning element (J) between the internal pipe (22) and the external pipe (21), and
- an introduction module (4) comprising a push mechanism (7), guided longitudinally according to said X axis, which is configured to move at least one spacer (1) in the positioning element (J) of the longitudinal pipeline (2).

2. System according to claim 1, wherein, the external pipe (21) comprising a front edge (21a) and a rear edge (21b), the positioning module (4) comprises a front blocking mechanism (5) and a rear blocking mechanism (6), adapted to cooperate respectively with the front edge (21a) and the rear edge (21b) of the external pipe (21).

3. System according to one of claims 1 to 2, wherein, said push mechanism (7) has a ring section, able to be entered into the positioning element (J) of the longitudinal pipeline (2).

4. System according to one of claims 1 to 3, wherein, the introduction module (4) comprises multiple guiding mechanisms (8) spread out longitudinally according to the X axis to guide the push mechanism (7).

5. System according to one of claims 1 to 4, wherein, the introduction module (4) comprises means of driving (9) the push mechanism (7).

6. System according to one of claims 1 to 5, wherein, the introduction module (4) comprises stop means (41) configured to limit the movement of the push mechanism (7).

7. Method of positioning, by means of a system according to one of claims 1 to 6, of at least one spacer (1) in a longitudinal pipeline (2) comprising an external pipe (21) and an internal pipe (22) mounted in said external pipe (21), the method comprising:
- a step of blocking the pipeline (2) according to an X axis by keeping a positioning element (J) between the internal pipe (22) and the external pipe (21), and
- a step of longitudinally introducing the spacer (1) according to the X axis into the positioning element (J) of the longitudinal pipeline (2).

8. Method according to claim 7, wherein, the method comprises a step of mounting the space (1) on a section of the internal pipe (22) extending onto the surface of the external pipe (21).

9. Method according to one of claims 7 and 8, wherein, the method comprises a step of implementing a stop mechanism (41) to limit the introduction path.

10. Method of bending a longitudinal pipeline (2) comprising an external pipe (21) and an internal pipe (22) mounted in said external pipe (21), the method comprising:
- a method of positioning, according to one of claims 7 to 9, at least one spacer (1) in a longitudinal pipeline (2) at a determined longitudinal position; and
- a step of bending said longitudinal pipeline (2) at the level of said determined longitudinal position.
